# EUROPEAN PATENT APPLICATION

(11) **EP 4 546 138 A1**
(43) Date of publication of application: **30.04.2025**
(21) Application number: 23841767.9
(22) Date of filing: 15.03.2023
(51) Int. Cl.: G06F 9/54

(54) **MESSAGE SENDING METHOD, CODE DISPLAY METHOD, APPARATUSES, AND RELATED DEVICE**

(30) Priority: 22.07.2022 CN 202210868297; 22.09.2022 CN 202211157354
(71) Applicant: Huawei Cloud Computing Technologies Co., Ltd., Guiyang, Guizhou 550025 (CN)
(72) Inventor: FU, Chaobin, Guiyang, Guizhou 550025 (CN); WANG, Dingchun, Guiyang, Guizhou 550025 (CN); XU, Songwei, Guiyang, Guizhou 550025 (CN); WU, Zhenhua, Guiyang, Guizhou 550025 (CN)
(74) Representative: Goddar, Heinz J.
(86) International application number: PCT/CN2023/081554
(87) International publication number: WO 2024/016690

(57) **Abstract**

This application provides a message sending method and a code display method, so that a related person reviews code in a development environment of the code, to improve code development efficiency. The message sending method includes: receiving a first message, where the first message includes review comment information corresponding to first code, the first code is uploaded by a first user to a code repository via a first client, the review comment information includes related information of a comment provided by a second user for the first code, and the second user is a developer corresponding to the first code; and sending a second message to the first client, where the second message includes the review comment information, and the second message indicates the first client to synchronously display the review comment information and the first code based on a development environment of the first code. **In** addition, this application further provides corresponding apparatuses, a computer device cluster, a computer-readable storage medium, and a computer code product.

## Description

This application claims priorities to Chinese Patent Application No. 202210868297.8, filed with the China National Intellectual Property Administration on July 22, 2022 and entitled "MULTI-ROLE AND MULTI-END REAL-TIME SYNCHRONIZATION CODE REVIEW METHOD, COMPUTING CLUSTER, AND RELATED DEVICE", and to Chinese Patent Application No. 202211157354.8, filed with the China National Intellectual Property Administration on September 22, 2022 and entitled "MESSAGE SENDING METHOD, CODE DISPLAY METHOD, APPARATUS, AND RELATED DEVICE", both of which are incorporated herein by reference in their entireties.

### TECHNICAL FIELD

This application relates to the field of computer software technologies, and in particular, to a message sending method, a code display method, an apparatus, and a related device.

### BACKGROUND

With continuous development of the computer field, a software scale increasingly expands. As the software scale increasingly expands, a possibility of a problem in software code written by a skilled person also increasingly increases. Therefore, to ensure code quality, before code delivery, a reviewer can review code written by a developer, to discover a problem and a vulnerability in the code in a timely manner. The foregoing process is referred to as code review. A most conventional code review method is that the reviewer goes to a computer of the developer, and the reviewer reviews code on the computer of the developer. The foregoing method has a problem of low code review efficiency.

To improve the code review efficiency, the code can be reviewed currently based on a code repository. Specifically, after completing code writing, the developer can upload to-be-reviewed code to the code repository. The reviewer can find the to-be-reviewed code in the code repository and review the code. After the code review is completed, the reviewer can provide a review comment for the to-be-reviewed code and upload the review comment to the code repository. In this way, the developer can view the review comment of the reviewer on a client page of the code repository to modify and adjust the code.

However, the foregoing code review procedure is implemented based on the client page of the code repository, and efficiency of modifying and adjusting the code by the developer is low.

### SUMMARY

In view of this, this application provides a message sending method and a code display method, so that a related person reviews code in a development environment of the code, to improve code development efficiency. This application further provides corresponding apparatuses, a computer device cluster, a computer-readable storage medium, and a computer code product.

According to a first aspect, this application provides a message sending method. The method may be applied to a computing device or a computing device cluster that provides a code review service, and is performed by a message sending apparatus. During specific implementation, the message sending apparatus first receives a first message, then generates a second message based on the first message, and sends the second message to a first client. The first message includes review comment information corresponding to first code. The review comment information corresponding to the first code is related information of a comment provided by a second user as a reviewer for the first code. The first code is developed by a first user on the first client, and is uploaded to a code repository via the first client. The second message also includes the review comment information corresponding to the first code, and the second message indicates the first client to synchronously display the first code and the review comment information corresponding to the first code based on a development environment of the first code.

In this way, message transfer in a code review process is implemented based on the message sending apparatus instead of the code repository, so that a developer can simultaneously view, in the development environment of the first code, the first code and the comment provided by the reviewer for the first code. Therefore, the developer does not need to frequently switch between the development environment of the first code and a client page of the code repository, thereby improving code review efficiency.

In some possible implementations, the message sending apparatus may be further used to enable the reviewer of the first code to review the first code on a page corresponding to the development environment of the first code. Specifically, the message sending apparatus may receive a third message, where the third message indicates that the first code enters a code review procedure. Then, the message sending apparatus may generate a fourth message based on the third message, and send the fourth message to a second client. The second client is a client corresponding to the second user. The fourth message indicates the second client to obtain, from the code repository, the first code uploaded by the first user, and display the first code based on a preset page. The preset page is a page that matches the development environment of the first code. In other words, a format of the preset page matches a format of a page of the development environment of the first code. In this way, message transfer in a code review process is implemented based on the message sending apparatus instead of the code repository, so that the reviewer can view the first code on the preset page that matches the development environment of the first code and provide a comment, thereby improving code review efficiency.

Optionally, the preset page is the page of the development environment of the first code, or the preset page is a page of a remote development environment (also referred to as a cloud development environment) of the first code on the second client.

In some possible implementations, the development environment of the first code is installed on the second client. Correspondingly, the preset page is the page of the development environment of the first code. The third message indicates the second client to download the first code from the code repository. To be specific, the second client downloads the first code from the code repository based on the third message, and displays the first code in the development environment of the first code.

In some possible implementations, the development environment of the first code is not installed on the second client. In this case, the second client may display the first code based on the page provided in the remote development environment. The preset page may be a browser page, and is used to display the web page of the remote development environment. Specifically, the message sending apparatus may send a fifth message to a development environment providing apparatus. The development environment of the first code is installed on the development environment providing apparatus, and the development environment of the first code may be provided for the second client via a network. The fifth message indicates the development environment providing apparatus to provide the development environment of the first code for the second client via the network. In this case, the second user may view, on the second client, the preset page that matches the page of the development environment of the first code. This is equivalent to displaying the first code to the second user in the development environment of the first code.

In some possible implementations, if the second user does not enable the second client, or the second user does not log in to the second client, the message sending apparatus cannot determine an object to which the fourth message is sent, and the foregoing effect of displaying the first code on the preset page via the second client cannot be achieved. Therefore, before sending the fourth message to the second client based on the third message, the message sending apparatus may first determine whether the second client is in a login state. If the second client is in the login state, the message sending apparatus sends the fourth message to the second client based on the third message. In this way, it is ensured that the second client is in the login state, and the fourth message is sent, so that the second user can review the first code on the preset page.

In some possible implementations, the message sending apparatus determines that the second client is in a logout state. In this case, to enable the second user to review the first code on the preset page, the message sending apparatus may guide the second user to log in to the second client. Specifically, if the second client is in the logout state, the message sending apparatus sends prompt information to a preset device, to prompt, by using the prompt information, the second user to log in to the second client. The preset device is a preset communication device corresponding to a second person, for example, may be a mobile terminal or a computer device of the second person. The prompt information may be, for example, an instant messaging message, or may be a voice message or an SMS message.

In some possible implementations, as a developer of the first code, the first user may perform adjustment and modification based on a review comment provided by the second person, and re-upload modified first code (referred to as second code below) to the code repository. After the second code is uploaded to the code repository, the message sending apparatus sends a sixth message to the second client, so that the second client displays the sixth message based on the preset page. In this case, the second user may review the modified first code on a page of a corresponding development environment.

In some possible implementations, the first user may further reply to the review comment provided by the second person. Correspondingly, the message sending apparatus may obtain a seventh message, where the seventh message includes reply information of the first user to the review comment information provided by the second user. Then, the message sending apparatus may send the reply information to the second client, so that the second client displays the reply information by using the preset page. In this way, depending on implementing the code review procedure, the reviewer can view, on the page corresponding to the development environment of the first code, the reply provided by the developer.

According to a second aspect, this application provides a code display method. The method may be applied to a code display apparatus on a first client, and the first client is a client corresponding to a developer (namely, a first user) of first code. When the code display method provided in this application is performed, the code display apparatus first receives review comment information, where the review comment information includes related information of a comment provided by a reviewer corresponding to the first code for the first code. Then, the code display apparatus displays the first code and the review comment information in an associated manner in a development environment of the first code. In this way, a user using the first client, for example, the first user, can simultaneously view the reviewed first code and the comment information provided by the reviewer for the first code. Therefore, the code and the review comment are viewed on a same page, so that it avoids a case that the developer frequently performs page switch in a code adjustment process, thereby improving code review efficiency. Optionally, the code display apparatus is a control integrated into the first client.

In some possible implementations, the developer may trigger, via the first client, to enter a review procedure of the first code. Specifically, the first user may trigger a review operation on the first client (or another device). After detecting that the review operation is triggered, the code display apparatus may send a review request message to a message sending apparatus, so that the message sending apparatus learns that the first code enters the review procedure. Optionally, the review request message and the foregoing third message may be a same message.

According to a third aspect, this application provides a message sending method. The method may be applied to a message sending apparatus on a second client, and the second client is a client corresponding to a reviewer (namely, a second user) of first code. When performing the message sending method provided in this application, the message method apparatus may first display the first code based on a preset page. A format of the preset page matches a format of a page of a development environment of the first code, and the first code is uploaded by a first user to a code repository via a first client. Then, the message sending apparatus may obtain review comment information provided by the second user for the first code. The review comment information includes related information of a comment provided by the second user for the first code. Then, the message sending apparatus sends a review message to the first client, where the review message includes the review comment information. In this way, a user using the second client, for example, the second user, may view the first code on the page corresponding to the development environment of the first code, to facilitate reviewing the first code. Optionally, the message sending apparatus is a control integrated into the .

In some possible implementations, the second client includes the development environment of the first code. In this case, the code display apparatus may obtain the first code from the code repository, and display the first code on the preset page. Correspondingly, the preset page is the page of the development environment of the first code.

In some possible implementations, the second client does not include the development environment of the first code. In this case, the second client may be, for example, a browser installed on a computer device of the second user, and the preset page may be a web page corresponding to a remote development vision. Correspondingly, before displaying the first code, the message sending apparatus may first create the preset page. Specifically, the message sending apparatus first receives the first code and a page material of the preset page that are sent by a development environment providing apparatus, and then generates the preset page based on the page material of the preset page, to display the first code on the preset page.

According to a fourth aspect, this application provides a message sending apparatus. The apparatus includes: a first receiving module, configured to receive a first message, where the first message includes review comment information corresponding to first code, the first code is uploaded by a first user to a code repository via a first client, the review comment information includes related information of a comment provided by a second user for the first code, and the second user is a reviewer corresponding to the first code; and a first sending module, configured to send a second message to the first client, where the second message includes the review comment information, and the second message indicates the first client to synchronously display the review comment information and the first code based on a development environment of the first code.

In some possible implementations, the apparatus further includes: a second receiving module, configured to receive a third message, where the third message indicates that the first code enters a code review procedure; and a second sending module, configured to send a fourth message to a second client based on the third message, where the fourth message indicates the second client to obtain the first code in the code repository and display the first code based on a preset page, a format of the preset page matches a format of a page of the development environment of the first code, and the second client is a client corresponding to the second user.

In some possible implementations, the second client includes the development environment of the first code, the preset page is the page of the development environment of the first code, and the fourth message further indicates the second client to obtain the first code from the code repository.

In some possible implementations, the second client does not include the development environment of the first code, and the apparatus further includes a third sending module, where the third sending module is configured to send a fifth message to a development environment providing apparatus, the development environment providing apparatus is configured to provide the development environment of the first code for the second client via a network, and the fifth message indicates the development environment providing apparatus to provide the development environment of the first code for the second client via the network.

In some possible implementations, the apparatus further includes a third sending unit, where the third sending unit is further configured to: before the fourth message is sent to the second client based on the third message, determine that the second client is in a login state.

In some possible implementations, the third sending unit is further configured to send prompt information to a preset device in response to the second client being in a logout state, where the prompt information is used to prompt the second user to log in to the second client, and the preset device is a communication device preset by a second person.

In some possible implementations, the second sending module is further configured to send a sixth message to the second client in response to second code being uploaded to the code repository, the second code is first code modified by the first user based on the review comment information, and the sixth message indicates the second client to display the second code based on the preset page.

In some possible implementations, the second obtaining module is further configured to obtain a seventh message, where the seventh message includes reply information of the first user to the review comment information; and
the second sending module is further configured to send the reply information to the second client, to enable the second client to display the reply information by using the preset page.

According to a fifth aspect, this application provides a code display apparatus. The apparatus is used in and runs on a first client, and the apparatus includes: a receiving module, configured to receive review comment information, where the review comment information includes related information of a comment made by a reviewer corresponding to first code on the first code, and the first code is uploaded to a code repository via the first client; and a display module, configured to display the first code and the review comment information in an associated manner in a development environment of the first code.

In some possible implementations, the apparatus further includes a sending module, where the sending module is configured to send a review request message in response to a first user triggering a review operation, the first user is a user corresponding to the first client, and the review request message is used to request the reviewer corresponding to the first code to review the first code.

According to a sixth aspect, this application provides a message sending apparatus. The apparatus is used in a second client, and the apparatus includes: a display module, configured to display first code based on a preset page, where a format of the preset page matches a format of a page of a development environment of the first code, and the first code is uploaded to a code repository via a first client; an obtaining module, configured to obtain review comment information, where the review comment information includes related information of a comment provided, for the first code, by a user who uses the second client; and a sending module, configured to send a comment message to the first client, where the comment message includes the review comment information.

In some possible implementations, the second client includes the development environment of the first code, and the preset page is the page of the development environment of the first code; and the obtaining module is further configured to obtain the first code from the code repository.

In some possible implementations, the second client does not include the development environment of the first code, and the preset page is used to control the development environment that is of the first code and that is provided by a development environment providing apparatus; the obtaining module is further configured to receive the first code and a page material of the preset page that are sent by the development environment providing apparatus; and the display module is further configured to generate the preset page based on the page material of the preset page.

According to a seventh aspect, this application provides a computing device cluster. The computing device includes at least one computing device, and the at least one computing device includes at least one processor and at least one memory. The at least one memory is configured to store instructions, and the at least one processor executes the instructions stored in the at least one memory, to enable the computing device cluster to perform the message sending method according to any one of the first aspect or the possible implementations of the first aspect. It should be noted that the memory may be integrated into the processor, or may be independent of the processor. The at least one computing device may further include a bus. The processor is connected to the memory through the bus. The memory may include a readable memory and a random access memory.

According to an eighth aspect, this application provides a computer-readable storage medium. The computer-readable storage medium stores instructions, and when the instructions are run on at least one computing device, the at least one computing device is enabled to perform the method according to any one of the foregoing aspects or the implementations of the foregoing aspects.

According to a ninth aspect, this application provides a computer program product including instructions. When the computer program product runs on at least one computing device, the at least one computing device is enabled to perform the method according to any one of the foregoing aspects or the implementations of the foregoing aspects.

Based on the implementations provided in the foregoing aspects, the implementations may be further combined to provide more implementations in this application.

### BRIEF DESCRIPTION OF DRAWINGS

FIG. 1 is a diagram of an example application scenario according to an embodiment of this application;
FIG. 2 is a diagram of another example application scenario according to an embodiment of this application;
FIG. 3 is a schematic flowchart of a code review method according to an embodiment of this application;
FIG. 4 is a diagram of a structure of a computing device according to an embodiment of this application; and
FIG. 5 is a diagram of a structure of a computing device cluster according to an embodiment of this application.

### DESCRIPTION OF EMBODIMENTS

The following describes the solutions in embodiments provided in this application with reference to the accompanying drawings in this application.

In the specification, the claims, and the accompanying drawings of this application, the terms "first", "second", and the like are intended to distinguish between similar objects but do not necessarily indicate a specific order or sequence. It should be understood that the terms used in such a way are interchangeable in proper circumstances, which is merely a distinguishing manner that is used when objects having a same attribute are described in embodiments of this application.

Code review needs to be implemented jointly by a plurality of persons. Because different persons use different computer devices, reviewed code needs to be displayed on clients of a plurality of computer devices. In addition, a comment provided by a reviewer for code also needs to be displayed to a developer of the code, so that the developer adjusts the code based on the comment of the reviewer. Correspondingly, a reply of the developer to the comment and code modified by the developer based on the comment also need to be displayed to the reviewer of the code.

Currently, a code repository can be used to meet a requirement of multi-end display of the code and the comment in a code review process. The code repository is a database running on a server or a server cluster. Specifically, the developer may upload developed code to the code repository, so that the reviewer downloads the code from the code repository for review. In addition, the comment provided by the reviewer and the reply of the developer to the comment can be displayed on a client page of the code repository.

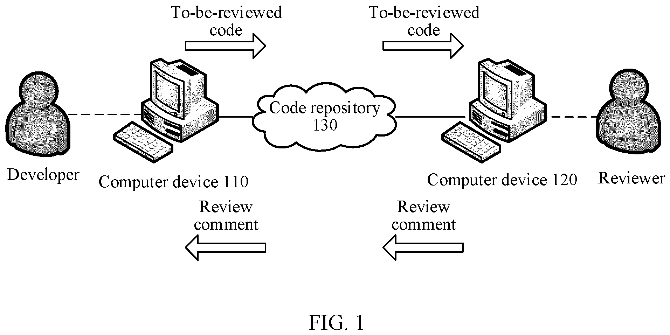

For example, FIG. 1 is a diagram of an application scenario according to an embodiment of this application. In the embodiment shown in FIG. 1, a computer device 110, a computer device 120, and a code repository 130 are included. The code repository 130 may be implemented by using a server or a server cluster. The computer device 110 is a computer device used by a developer, and the computer device 120 is a computer device used by a reviewer. Clients of the code repository 130 are deployed on the computer device 110 and the computer device 120. A client of the code repository 130 may be, for example, a web client. The computer device 110 and the computer device 120 may access corresponding web links by using a web browser, to jump to a client page of the code repository 130. The client page of the code repository 130 is a web page.

After completing code development, the developer may upload code to the code repository 130 through the computer device 110, and send a review request by using the client page of the code repository 130. The reviewer may view, on the client page that is of the code repository 130 and that is displayed on the computer device 120, the review request sent by the developer. Then, the reviewer controls the computer device 120 to download, from the code repository, the code uploaded by the developer, and reviews the code. After the reviewer completes the review, the reviewer may use the computer device 120 to upload a review comment by using the client page of the code repository 130. In this way, the computer device 120 can display the review comment, so that the developer views the review comment on the client page of the code repository 130. Correspondingly, the developer may modify the code on the computer device 110 based on the review comment, upload modified code to the code repository 130 through the computer device 110, and then upload a reply to the review comment by using the client page that is of the code repository 130 and that is displayed on the computer device 110. Code review can be completed by performing the foregoing actions once or a plurality of times.

Currently, code development, viewing, and modification are all performed based on a development environment of the code. In other words, in the foregoing code review process, after downloading the code from the code repository 130, the reviewer needs to enable the downloaded code on the computer device 120 by using a development environment corresponding to the code, to conveniently and quickly review the code. In addition, after viewing the review comment of the reviewer on the client page of the code repository 130, the developer needs to enable the code on the computer device 110 by using the corresponding development environment, and edit and modify the code.

In this way, in a code adjustment process, the developer views review comment information on the client page of the code repository, then switches to the development environment of the code, and edits and adjusts the code in the development environment of the code. In the code review process, the reviewer views the code in the development environment of the code, and then switches to the client page of the code repository to provide a comment for the code.

In other words, in the foregoing code repository-based code review method, comment exchange and code exchange in the code review are implemented on different programs. In this case, the developer and the reviewer need to frequently switch between the development environment of the code and the client page of the code repository. Consequently, the code review is fragmented, and code review efficiency is reduced.

In addition, in some scenarios, the developer may not keep the client of the code repository online for a long time. In this case, the developer may not be able to view, in a timely manner, the review comment provided by the reviewer. In addition, the reviewer may not keep the client of the code repository online for a long time. In this case, the reviewer may not be able to view the review request of the developer in a timely manner. For example, if the client of the code repository is the web client, after a browser web page is closed, the developer and the reviewer cannot view a message prompt in the code repository in a timely manner. The message prompt can be viewed only when the client page of the code repository is opened by using the web browser again.

In addition, in some scenarios, a development environment of to-be-reviewed code may not be installed on a computer device of the reviewer. In this case, the reviewer can only reconfigure the development environment of the code or view the to-be-reviewed code in another way. For example, in some scenarios, the reviewer reviews code of a plurality of projects. Different code may correspond to different development environments. In this case, to implement the code review, a plurality of development environments need to be configured on the computer device of the reviewer. Consequently, workload of skilled persons increases due to the configuration of the plurality of development environments, and a problem such as a configuration error may occur in a configuration process.

Based on this, embodiments of this application provide a message sending method. The method may be applied to a message sending apparatus in a service center. The service center may be implemented based on a single computing device (for example, a server) or a computing device cluster, and is configured to process information in a code review process. In addition, embodiments of this application further provide a code display method applied to a first client and a message sending method applied to a second client. The first client is a client running on a computer device used by a developer. For example, the first client may be a development environment on the computer device used by the developer. The second client is a client running on a computer device used by a reviewer. Specifically, the code display method is performed by a code display apparatus in the first client, and the message sending method run on the second client is performed by a message sending apparatus in the second client.

It may be understood that the message sending apparatus in the service center and the message sending apparatus in the second client in the foregoing descriptions are different apparatuses. For ease of differentiation, in the following descriptions, the message sending apparatus in the service center is referred to as a first message sending apparatus, and the message sending apparatus in the second client is referred to as a second message sending apparatus.

Specifically, when performing the technical solutions provided in embodiments of this application, the first message sending apparatus may receive a first message. The first message is a message that is triggered by the developer and that indicates that first code enters a review procedure. Then, the first message sending apparatus sends a second message to the second client. The second message sending apparatus receives the second message. Then, the second message sending apparatus displays the first code based on a preset page. A format of the preset page matches a format of a page of a development environment of the first code. In this way, an effect of displaying the first code to the reviewer in the development environment of the first code is achieved.

In a process of reviewing the first code, the reviewer may input a review comment on a page displayed on the second client, so that the second message sending apparatus obtains review comment information. Then, the second message sending apparatus sends the review comment information to the first client by using a service center. Specifically, a sending module may send, to the service center, a third message including the review comment information. The first message sending apparatus receives the third message, and sends a fourth message to the first client. The fourth message includes the review comment information. In this way, after the code display apparatus receives the fourth message, the code display apparatus may display the first code and the review comment information in an associated manner in the development environment of the first code.

In other words, the code display apparatus is deployed on the first client of the developer, the first message sending apparatus is deployed on the service center, and the second message sending apparatus is deployed on the second client of the reviewer, so that the review comment provided by the reviewer can be displayed with the first code in an associated manner in the development environment of the first code. In this way, code review is implemented based on the service center instead of a code repository, so that the developer can view, in the development environment of the first code, both the first code and the comment provided by the reviewer for the first code, and the reviewer can browse the first code on the preset page that matches the development environment of the first code, and provide a comment. Therefore, the developer and the reviewer do not need to frequently switch between the development environment of the first code and a client page of the code repository, thereby improving code review efficiency.

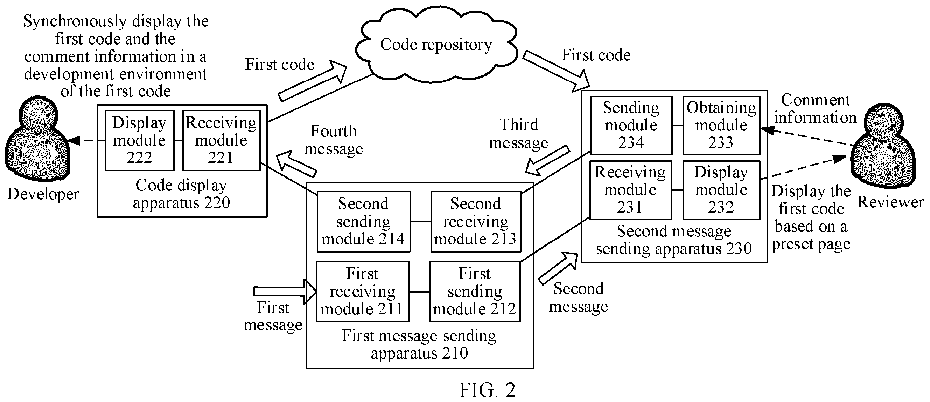

In actual application, the foregoing methods may be performed by different modules in the apparatuses. For example, in an application scenario shown in FIG. 2, a first message sending apparatus 210 includes a first receiving module 211, a first sending module 212, a second receiving module 213, and a second sending module 214, a code display apparatus 220 includes a receiving module 221 and a display module 222, and a second message sending apparatus 230 includes a receiving module 231, a display module 232, an obtaining module 233, and a sending module 234.

In actual application, the first receiving module 211 is configured to receive a first message, and the first sending module 212 is configured to send a second message to the receiving module 231 in the second message sending apparatus 230. The receiving module 231 is configured to receive the second message sent by the first sending module 212. The display module 232 is configured to display first code to a reviewer based on a preset page. The obtaining module 233 is configured to obtain review comment information provided by the reviewer. The sending module 234 is configured to send the review comment information to the second receiving module 213 in the first message sending apparatus by using a third message, and the second sending module 214 is configured to send a fourth message to the receiving module 221 in the code display apparatus 220 based on the third message. The display module 222 is configured to synchronously display the first code and the review comment information in a development environment of the first code based on the review comment information in the fourth message.

In actual application, the first message sending apparatus, the code display apparatus, and the second message sending apparatus may be implemented by using software, or may be implemented by using hardware. The following uses the first message sending apparatus as an example for description.

The first message sending apparatus is used as an example of a software functional unit, and may include code run on a computing instance. The computing instance may include at least one of a physical host (a computing device), a virtual machine, and a container. Further, there may be one or more computing instances. For example, the first message sending apparatus may include code run on a plurality of hosts/virtual machines/containers. It should be noted that the plurality of hosts/virtual machines/containers configured to run the code may be distributed in a same region (region), or may be distributed in different regions. Further, the plurality of hosts/virtual machines/containers configured to run the code may be distributed in a same availability zone (availability zone, AZ), or may be distributed in different AZs. Each AZ includes one data center or a plurality of data centers that are geographically close to each other. Generally, one region may include a plurality of AZs.

Similarly, the plurality of hosts/virtual machines/containers configured to run the code may be distributed in a same virtual private cloud (virtual private cloud, VPC), or may be distributed in a plurality of VPCs. Generally, one VPC is disposed in one region. For cross-region communication between two VPCs in a same region and between VPCs in different regions, a communication gateway needs to be disposed in each VPC, and interconnection between the VPCs is implemented through the communication gateway.

The code display apparatus is used as an example of a software functional unit. In this case, the code display unit may be a software plug-in on a first client. The first client may be, for example, a client of a development environment of first code. Optionally, the first client is an integrated development environment (integrated development environment, IDE) in which a user develops the first code.

The second message sending apparatus is used as an example of a software functional unit. In this case, the second message sending apparatus may be a software plug-in on a second client. The second client may be, for example, a client of a development environment of the first code. Alternatively, the second client may be a browser, and is configured to display a web page of a remote IDE. The remote IDE may also be referred to as a cloud IDE.

The first message sending apparatus is used as an example of a hardware functional unit, and the first message sending apparatus may include at least one computing device, for example, a server. Alternatively, the first message sending apparatus may be a device implemented by using an application-specific integrated circuit (application-specific integrated circuit, ASIC), a programmable logic device (programmable logic device, PLD), or the like. The PLD may be implemented by a complex programmable logic device (complex programmable logic device, CPLD), a field programmable gate array (field programmable gate array, FPGA), generic array logic (generic array logic, GAL), or any combination thereof.

A plurality of computing devices included in the first message sending apparatus may be distributed in a same region, or may be distributed in different regions. The plurality of computing devices included in the first message sending apparatus may be distributed in a same AZ, or may be distributed in different AZs. Similarly, the plurality of computing devices included in the first message sending apparatus may be distributed in a same VPC, or may be distributed in a plurality of VPCs. The plurality of computing devices may be any combination of computing devices such as the server, the ASIC, the PLD, the CPLD, the FPGA, and the GAL.

The following describes in detail various non-limiting specific implementations of a code review process.

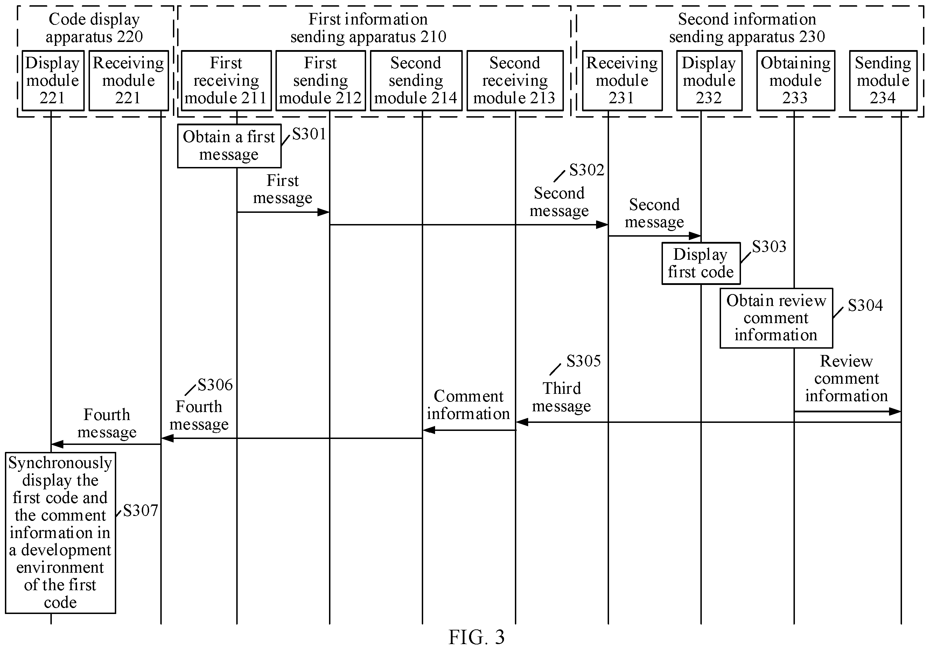

FIG. 3 is a schematic flowchart of a message sending method and a code display method according to an embodiment of this application. The methods may be applied to the application scenarios shown in FIG. 3, or may be applied to another applicable application scenario. The following uses, for description, an example in which the methods are applied to the application scenario shown in FIG. 3. For ease of description, the foregoing developer may also be referred to as a first user, and the foregoing reviewer may also be referred to as a second user. The developer logs in to a first client by using user information of the first user, and the reviewer logs in to a second client by using user information of the second user.

Specifically, the message sending method and the code display method shown in FIG. 3 may specifically include the following steps.

S301: A first receiving module 211 receives a first message.

Before a code review procedure is entered, the developer may first upload to-be-reviewed first code to a code repository, and trigger to enter the code review procedure. When the code review procedure is entered, the first receiving module 211 may obtain the first message. Correspondingly, a first message sending apparatus 210 in a service center determines, based on the first message received by the first receiving module 211, that the first code enters the code review procedure.

**In** this embodiment, the first message is a message that is triggered by the developer and that is sent to the first message sending apparatus 210, and indicates that the first code enters the code review procedure. Optionally, the first message may be triggered by the developer via the first client. In other words, the developer may trigger, on the first client, to send the first message to the first receiving module 211.

For example, in a possible implementation, the developer may trigger to send the first message through a code display apparatus 220. Specifically, it can be learned from the foregoing descriptions that the code display apparatus 220 may be a plug-in in a development environment that is of the first code and that is on a computer device of the developer. In this case, the code display apparatus 220 may display a code review control to the developer in the development environment of the first code. In this way, when the developer completes development of the first code and expects to enter the code review procedure, the developer may trigger the code review control. After the code review control is triggered, the first client may upload the first code to the code repository, and the code display apparatus 220 may send the first message to the first receiving module 211.

Alternatively, the first message may be triggered by the developer via another client. For example, in some possible implementations, procedure management is performed on a software development procedure based on office platform software or other software. In this case, the first message may alternatively be triggered by the developer via a software client on a mobile terminal or the computer device.

Optionally, the developer may first upload the first code, and then send the first message to the first receiving module 211 via the first client (or another client). In other words, when the first receiving module 211 receives the first message, the first code has been uploaded to the code repository. Correspondingly, the first message may include related information indicating the first code, for example, may include identification information of the first code. In this case, after receiving the first message, the first receiving module 211 may determine, based on the foregoing information, that the first code enters the code review procedure.

Alternatively, the first message may include a review task identifier. A review task is a pre-created code review task, and indicates that code review needs to be performed on a part corresponding to the first code in a software development phase. After the review task is created, the first message sending apparatus 210 may store a correspondence between the review task identifier, an identifier of the first user, and an identifier of the second user. In this way, after the first message is received, the first user and the second user may be determined based on the review task identifier in the first message. Similarly, an association relationship between the first code and the review task identifier may also be recorded in the code repository, so that the reviewer views the first code corresponding to the review task identifier.

It may be understood that, in some other possible implementations, there may be no association relationship between uploading of the first code and receiving of the first message. In other words, the developer may separately upload the first code and trigger the first message.

After determining, based on the first message, that the first code enters the code review procedure, the first receiving module 211 may trigger a first sending module 212 to perform step S302. For example, the first receiving module 211 may forward the first message to the first sending module 212, or the first receiving module 211 may send related information such as the monitoring task identifier to the first sending module 212.

S302: The first sending module 212 sends a second message to a receiving module 231.

After the first receiving module 211 receives the first message, the first sending module 212 may send the second message to the receiving module 231 of a second message sending apparatus 230 on the second client. The second message indicates a display module 232 of the second message sending apparatus 230 to display the first code based on a preset page. For descriptions of specific details of displaying the first code, refer to S303. Details are not described herein.

In this embodiment of this application, the second message indicates a client of the reviewer to display the first code to the reviewer. Correspondingly, before the second message is sent, the first message sending apparatus 210 may first determine the second client, and then the first sending module 212 sends the second message to the receiving module 231.

Optionally, the first message sending apparatus 210 may prestore a correspondence between the first user and the second user. In this case, after the first message triggered by the first user is received through the first receiving module 211, the second message may be sent to the second client corresponding to the second user through the first sending module 212. For example, it can be learned from the foregoing descriptions that if the first receiving module 211 sends the view task identifier to the first sending module 212, the first sending module 212 may determine the second user based on the review task identifier, to send the second message to the second user.

It can be learned from the foregoing descriptions that the second client of the reviewer may be in a disabled state. For example, a computer device of the reviewer is in the disabled state, or the reviewer does not log in to/does not enable the second client. In this way, even if the first sending module 212 sends the second message to the receiving module 231, the second client cannot display the first code to the reviewer, and the reviewer cannot review the first code.

Therefore, before the second message is sent to the receiving module 231, a message sending module 230 may first determine whether the second user is in an online state. If the second user is in the online state, it indicates that the developer has logged in to the second client based on information about the second user. In this way, after the second message is sent to the receiving module 231, the second client can display the first code to the reviewer. The online state of the second user may be determined by using a login state of the second client. If the reviewer logs in to a second state by using the user information of the second user, the second client may send a first login message to the service center. In this case, the first message sending apparatus 210 can determine, based on the first login message, that the second user is in the online state. Similarly, after the reviewer disables the second client, or the reviewer logs out of the second client, the first message sending apparatus 210 may receive a first logout message, and determine that the second user is in an offline state.

Optionally, the first message sending apparatus 210 may receive the first login message and the first logout message by using a duplex communication protocol (for example, a Web Socket communication protocol).

In this embodiment of this application, that the second user is in the online state may also be referred to as that the second client is in a login state. That the second user is in the offline state may also be referred to as that the second user is in a logout state.

Similarly, the developer may also exchange information with the first message sending apparatus 210 according to the foregoing method, so that the first message sending apparatus 210 determines that the first client is in a login state or a logout state.

If the second user is in the offline state, the first message sending apparatus 210 may send prompt information to a preset device. The prompt information is used to prompt the reviewer to log in to the second client based on the user information of the second user. The preset device is a device configured to prompt the reviewer.

For example, the preset device may be a device on which instant messaging (Instant Messaging, IM) software of the reviewer logs in. Correspondingly, the prompt information sent by the first message sending apparatus 210 may be an IM message. In this way, after viewing the prompt information by using the IM software, the reviewer may log in to the second client, to review the first code on the second client. It may be understood that, if the IM software of the reviewer logs in on the computer device of the reviewer, the preset device may be the computer device of the reviewer.

Alternatively, the preset device may be a preset terminal device, for example, may be a terminal device such as a mobile phone of the reviewer. In this way, if the second user is in the offline state, the first message sending apparatus 210 may prompt, by making a phone call, sending an SMS message, or the like, the reviewer to log in to the second client. The prompt information may be preset voice information or text information.

In this way, even if the second client of the reviewer is in the disabled state, or the reviewer does not log in to the second client, the reviewer can be prompted, by using the prompt information, to enable and log in to the second client, so that the reviewer can review the first code in a timely manner. Therefore, code review efficiency is improved.

Considering that a plurality of kinds of software may run on the computer device of the reviewer, if the second client is in a background running state, the second client cannot display the first code to the reviewer. In this case, the first message sending apparatus 210 may also send a prompt message to the preset device, to prompt the reviewer to switch the second client to the foreground for running. Alternatively, the first message sending apparatus 210 may send a switching message to the second client, and the second client may prompt, based on the switching message, the reviewer to switch the second client to the foreground for running. Specifically, the second client may prompt, by using icon blinking or a desktop pop-up window, the reviewer to perform switching.

S303: The display module 232 displays the first code based on the preset page.

After the receiving module 231 receives the second message, the receiving module 231 may send the second message to the display module 232. After the second message is received, the display module 232 may display the first code based on the preset page. A page format of the preset page matches a format of a page of the development environment of the first code. In this way, the reviewer may review the first code in the development environment of the first code, to facilitate understanding and review of the reviewer.

Specifically, in this embodiment of this application, the display module 232 may display the first code based on a development environment that is of the first code and that is run locally, or may display the first code based on a development environment that is of the first code and that is run on a cloud. The following separately describes the two implementations.

In a first implementation, the display module 232 displays the first code based on the development environment that is of the first code and that is run locally.

The development environment that is of the first code and that is run locally is a development environment that is of the first code and that is installed on the computer device of the reviewer. In other words, the display module 232 displays the first code based on the development environment that is of the first code and that is installed on the computer device of the reviewer. In this case, the preset page is the page of the development environment of the first code, and the second client may be the development environment of the first code.

Optionally, the second client is the development environment that is of the first code and that is installed on the computer device of the reviewer. In this case, after the second message is received, the display module 232 may trigger the second client to download the first code from the code repository, and display the first code on the page of the development environment that is of the first code and that is provided by the second client.

In this embodiment, the first code displayed by the display module 232 may be obtained by the display module 232 from the code repository. Specifically, after the receiving module 231 receives the second message, the second message sending apparatus 230 may download the first code from the code repository. For example, the second message sending apparatus 230 may download the first code corresponding to the review task identifier from the code repository based on the review task identifier in the second message.

In other words, in the first implementation, the second message sending apparatus 230 may be a plug-in running in the development environment of the first code, and the computer device of the reviewer includes the development environment that is of the first code and in which the second message sending apparatus 230 is installed. After the second message sent by the service center is received, the development environment that is of the first code and that is on the computer device of the reviewer may download the first code from the code repository and display the first code, so that the reviewer reviews the first code in the development environment of the first code.

Alternatively, the first code displayed by the display module 232 may be carried in the second message. In other words, the first message sending apparatus 210 may download the first code from the code repository, and send the first code to the second message sending apparatus 230 by using the second message, so that the display module 232 displays the first code.

In a second implementation, the display module 232 displays the first code based on the development environment that is of the first code and that is run on the cloud.

The development environment that is of the first code and that is run on the cloud is a development environment that is of the first code and that is run on a computer device other than the computer device of the reviewer. The development environment that is of the first code and that is run on the cloud may also be referred to as a cloud IDE (cloud IDE) or a remote IDE. The computer device of the reviewer displays the first code based on a cloud IDE service.

If the computer device of the reviewer displays the first code based on the cloud IDE service, the second client may be a cloud IDE client on the computer device of the reviewer, and the foregoing first page is a page of the cloud IDE client. Optionally, the cloud IDE client may be a web client, and the first page is a web page.

The following first describes the cloud IDE.

Specifically, the cloud IDE is an integrated development environment in which a computing device cluster (or a computing device) provides code. The computer device may exchange information with the computer device cluster (or the computing device) based on the cloud IDE client. The page of the cloud IDE client matches a format of a page of the IDE corresponding to the cloud IDE service.

The page of the cloud IDE client is used to display code to a user. When the user performs an operation on the code based on the cloud IDE client, the cloud IDE client may determine, based on the operation performed by the user, instructions triggered by the user, and send the instructions triggered by the user to a computing device cluster running an IDE. The computing device cluster processes the code based on the instructions triggered by the user, and sends a result to the cloud IDE client. The cloud IDE client then displays a processing result to the user. In this way, because the format of the page of the cloud IDE client matches the format of the page of the IDE, and the operation performed by the user on the code may be presented in the cloud IDE client, for user experience, using the cloud IDE is the same as or similar to using a local IDE. In this way, without installing an IDE on a local computer device, an effect that can be achieved by the local IDE is achieved by using the development environment provided by the cloud.

With reference to the foregoing descriptions of the cloud IDE, it can be learned that in the implementation of displaying the first code based on the cloud IDE, the display module 232 may open the page (that is, the preset page) of the cloud IDE client, and display the first code on the page of the cloud IDE client. In this way, because the format of the page of the cloud IDE client matches the format of the development environment of the first code, for the reviewer corresponding to reviewing the first code, a display effect achieved by displaying the first code based on the page of the cloud IDE client can be the same as or similar to that achieved by displaying the first code based on the local development environment of the first code.

In this embodiment, the cloud IDE service is provided by a development environment providing apparatus. The development environment providing apparatus may be a software module running on the computing device or the computing device cluster. If the development environment providing apparatus runs in the computing device cluster, the development environment providing apparatus may alternatively be jointly implemented by a plurality of computing devices in the computing device cluster. The computing device on which the development environment providing apparatus runs is the same as a computing device on which the first message sending apparatus 210 runs. Alternatively, the computing device on which the development environment providing apparatus runs and a computing device on which the first message sending apparatus 210 runs belong to a same computing device cluster. Alternatively, the computing device on which the development environment providing apparatus runs and a computing device on which the first message sending apparatus 210 runs belong to different computing device clusters.

To enable the second client to display the first code based on the preset page, the first message sending apparatus 210 may indicate the development environment providing apparatus to provide the cloud IDE service for the computer device of the reviewer. Specifically, the first message sending apparatus 210 may send a fifth message to the development environment apparatus. After receiving the fifth message, the development environment providing apparatus may download the first code from the code repository based on the fifth message, and send the first code to the computer device of the reviewer. The development environment providing apparatus may further send a page material of the preset page to the computer device of the reviewer. In this way, the display module 232 may generate the preset page based on the received page material, and display the received first code on the preset page. An image viewed by the reviewer is an image of displaying the first code in the development environment of the first code. Optionally, the fifth message may be executed by the first sending module 212 or a second sending module 214, or may be executed by a third sending module (not shown in the figure) of the first message sending apparatus 210.

Therefore, the first code is displayed based on the development environment provided by the cloud instead of the development environment provided locally, so that even if the development environment of the first code is not installed on the computer device of the reviewer, the reviewer can view the first code in the development environment of the first code. Further, when the reviewer needs to review a plurality of types of code developed based on a plurality of development environments, the first code is displayed by using the page of the cloud IDE client, so that it can avoid a case that the plurality of development environments are installed on the computer device of the reviewer, to improve review efficiency.

In some possible implementations, the fifth message sent by the first message sending apparatus 210 to the development environment providing apparatus may include the review task identifier. In this way, the development environment providing apparatus may determine the first code and the second client based on the review task identifier, to download the first code from the code repository, and send the first code and the page material of the preset page to the second client.

It may be understood that, if the second client is in the disabled state, even if the development environment providing apparatus sends the page material and the first code to the computer device of the reviewer, the computer device of the reviewer cannot normally display the preset page. Therefore, before the first sending module 212 sends the second message, it may be determined that the second client is in an enabled state. Specifically, the first message sending apparatus 210 may use the solution shown in S302 to ensure that the second client is in the enabled state.

Optionally, considering that the reviewer may not open the page of the cloud IDE client for a long time, the first message sending apparatus 210 may consider by default that the second client is in the disabled state. In this case, after the first receiving module 211 receives the first message, the first message sending apparatus 210 may first send the prompt information to the preset device, to prompt the reviewer to enable the second client. After determining that the second client is in the login state, the first message sending apparatus 210 sends the fifth message to the development environment providing apparatus.

It may be understood that the foregoing two implementations are merely examples for description, and the display module 232 may alternatively display the first code in another manner.

In the foregoing descriptions, the display module 232 may display the first code based on the local development environment, or may display the first code based on the cloud IDE. In an actual application, the reviewer may need to review code developed based on the plurality of development environments. However, a part of the foregoing development environments may be installed on the computer device of the reviewer, and the other part of the development environments are not installed. Therefore, a manner of displaying the first code can be determined in at least the following three implementations.

In a first possible implementation, the first code may be displayed uniformly based on the cloud IDE. In other words, regardless of whether the development environment of the first code is installed on the computer device of the reviewer, the first code is displayed uniformly based on the cloud IDE.

In a second possible implementation, the manner of displaying the first code may be determined based on data stored in the first message sending apparatus 210.

Specifically, an identifier of the development environment installed on the computer device of the reviewer may be pre-recorded in the first message sending apparatus 210. After the first receiving module 211 receives the first message, the first message sending apparatus 210 determines, based on the recorded identifier of the development environment, whether the development environment of the first code has been installed on the computer device of the reviewer. If the development environment of the first code is installed, the first message sending apparatus 210 indicates, by using the second message, the computer device of the reviewer to display the first code based on the development environment of the first code. If the development environment of the first code is not installed, the first message sending apparatus 210 indicates, by using the second message, the computer device of the reviewer to display the first code based on the page of the cloud IDE client, and further sends the fifth message to the development environment providing apparatus.

In a third possible implementation, the manner of displaying the first code may be determined based on information fed back by the computer device of the reviewer.

Specifically, after the first receiving module 211 receives the first message, the first message sending apparatus 210 sends a query message to the computer device of the reviewer. The query message includes related information indicating the development environment of the first code, for example, information such as a name of the development environment of the first code or the review task identifier. After receiving the query message, the computer device of the reviewer may determine, based on the query message, whether the development environment of the first code is locally installed.

If the computer device of the reviewer determines that the development environment of the first code is locally installed, the computer device of the reviewer may send a first feedback message to the first message sending apparatus 210. The first message sending apparatus 210 sends the second message to the computer device of the reviewer based on the first feedback message, so that the display module 232 displays the first code in the development environment of the first code based on the second message.

If the computer device of the reviewer determines that the development environment of the first code is not locally installed, the computer device of the reviewer may send a second feedback message to the first message sending apparatus 210. The first message sending apparatus 210 sends the second message to the computer device of the reviewer based on the second feedback message, so that the display module 232 displays the first code on the page of the cloud IDE client based on the second message.

Optionally, the query message and the second message may be a same message. In other words, the second message sending apparatus 230 determines, based on the second message, whether the development environment of the first code is installed on the computer device of the reviewer. If the development environment of the first code is installed on the computer device of the reviewer, the display module 232 displays the first code based on the development environment of the first code. If the development environment of the first code is not installed on the computer device of the reviewer, the second message sending apparatus 230 sends a feedback message to a first message sending module 210.

S304: An obtaining module 233 obtains review comment information.

The reviewer may provide the review comment information on the preset page displayed by the display module 232. The obtaining module 233 obtains the review comment information provided by the reviewer. Optionally, the review comment information may be text information and/or image information. After obtaining the review comment information, the obtaining module 233 sends the review comment information to a sending module 234.

It may be understood that, to help the reviewer provide the review comment for the first code, the preset page displayed by the display module 232 may include one or more review comment input regions. The reviewer may input the review comment on the first code in a display comment input region. Alternatively, the preset page displayed by the display module 232 may include a review comment input control. When the reviewer expects to provide the review comment for the first code, the reviewer may trigger the review comment input control. After the review comment input control is triggered, the display module 232 displays the one or more review comment input regions on the preset page, so that the reviewer inputs the review comment on the first code. Alternatively, the reviewer may input the review comment on the first code in a code comment manner. A specific manner in which the reviewer inputs the review comment on the first code is not limited herein.

S305: The sending module 234 sends a third message to a second receiving module 213.

After receiving the review comment information obtained by the obtaining module 233, the sending module 234 in the second message sending apparatus 230 may send the third message to the second receiving module 313 in the first message sending apparatus 210. The third message includes the review comment information of the reviewer for the first code. Optionally, the third message may further include the review task identifier corresponding to the first code.

After receiving the third message, the second receiving module 213 sends the review comment information to the second sending module 214. Optionally, the second receiving module 213 sends the third message to the second sending module 214.

S306: The second sending module 214 sends a fourth message to a receiving module 221.

After receiving the third message sent by the second receiving module 213, the second sending module 214 may send the fourth message to the receiving module 221 in the code display apparatus 220. The fourth message includes the review comment information. Optionally, the fourth message and the third message may be a same message.

Similar to step S302, before sending the fourth message to the receiving module 221, the first message sending apparatus 210 may first determine that the first client is in the login state. If the first client is in the login state, the second sending module 214 sends the fourth message to the receiving module 221. If the first client is in the logout state, the first message sending apparatus 210 may send a prompt message to a preset device corresponding to the developer, to prompt the developer to enable the first client and log in to the first client. Specifically, the computer device of the developer may send a second login message to the first message sending apparatus 210 after the developer logs in to the first client by using the user information of the first user, and send a second logout message to the first message sending apparatus 210 after the first client is disabled or the developer logs out. The first message sending apparatus 210 may update a login state of the first client based on the second login message and the second logout message.

In this way, even if the first client of the developer is in the disabled state, or the developer does not log in to the first client, the developer can be prompted, by using the prompt information, to enable and log in to the first client, so that the reviewer can receive the review of the first code from the reviewer in a timely manner, and modify the first code in a timely manner. Therefore, code review efficiency is improved.

For specific descriptions of sending the prompt message and updating the login state of the first client, refer to the foregoing descriptions. Details are not described herein again.

S307: A display module 222 synchronously displays the first code and the review comment information in the development environment of the first code.

After the fourth message is received, the display module 222 in the code display apparatus 220 may synchronously display the first code and the review comment information in the development environment of the first code. In this case, the developer of the first code can view the review comment provided by the reviewer for the first code, and edit and modify the first code on a same page. Therefore, the developer does not need to frequently switch between the development environment of the first code and a client page of the code repository, thereby improving code review efficiency.

It may be understood that, in some other possible implementations, the display module may alternatively display the first code and the review comment information based on the cloud IDE. For a specific display manner, refer to the descriptions of S303. Details are not described herein again.

The developer may modify the first code based on the review comment information displayed by the display module 222. After the modification is completed, the developer may upload modified first code to the code repository, and trigger the first code to enter the review procedure again. In addition, the developer may reply to the review comment provided by the reviewer. Correspondingly, the developer may send reply information for the review comment information to the first message sending apparatus 210 via the first client or through another terminal device, and the second client of the reviewer may receive a comment provided by the developer and reply again.

It should be noted that in this embodiment of this application, a part of steps in the embodiment shown in FIG. 3 may be performed. For example, in some possible implementations, the first message sending apparatus may perform S305 and S306, and does not perform S301 and S302. Alternatively, in some other possible implementations, the first message sending apparatus may perform S301 and S302, and does not perform S305 and S306. This is not limited in this embodiment of this application.

It should be noted that, in this embodiment of this application, division and function descriptions of the units in the first message sending apparatus 210, the code display apparatus 220, and the second message sending apparatus 230 are merely used as examples.

For example, in another embodiment, the first receiving module 211 in the first message sending apparatus 210 may be configured to perform any step of the message sending method performed by the first message sending apparatus 210 in the foregoing embodiment. Similarly, the first sending module 212, the second receiving module 213, and the second sending module 214 may all be configured to perform any step in the foregoing message sending method. In addition, steps in which the first receiving module 211, the first sending module 212, the second receiving module 213, and the second sending module 214 are responsible for implementation may be specified as required. The first receiving module 211, the first sending module 212, the second receiving module 213, and the second sending module 214 respectively implement different steps in the message sending method, to implement functions of the first message sending apparatus 210.

For another example, in another embodiment, the receiving module 221 in the code display apparatus 220 may be configured to perform any step of the code display method performed by the code display apparatus 220 in the foregoing embodiment. Similarly, the display module 222 may also be configured to perform any step in the foregoing code display method. In addition, steps in which the receiving module 221 and the display apparatus 222 are responsible for implementation may be specified as required. The receiving module 221 and the display apparatus 222 respectively implement different steps in the code display method, to implement functions of the code display apparatus 220.

For another example, in another embodiment, the receiving module 231 in the second message sending apparatus 230 may be configured to perform any step of the message sending method performed by the second message sending apparatus 220 in the foregoing embodiment. Similarly, the display module 232, the obtaining module 233, and the sending module 234 may all be configured to perform any step in the foregoing message sending method. In addition, steps in which the receiving module 231, the display module 232, the obtaining module 233, and the sending module 234 are responsible for implementation may be specified as required. The receiving module 231, the display module 232, the obtaining module 233, and the sending module 234 respectively implement different steps in the message sending method, to implement functions of the second message sending apparatus 230.

In the embodiment shown in FIG. 3, the first message sending apparatus 210 (including the first receiving module 211, the first sending module 212, the second receiving module 213, and the second sending module 214) involved in the code review process, the code display apparatus 230 (including the receiving module 221 and the display apparatus 222), and the second message sending apparatus 230 (including the receiving module 231, the display module 232, the obtaining module 233, and the sending module 234) may be software configured on the computing device or the computing device cluster. In addition, the software runs on the computing device or the computing device cluster, so that the computing device or the computing device cluster can implement functions of the foregoing apparatuses. The following describes in detail apparatuses in a code review process from a perspective of hardware device implementation.

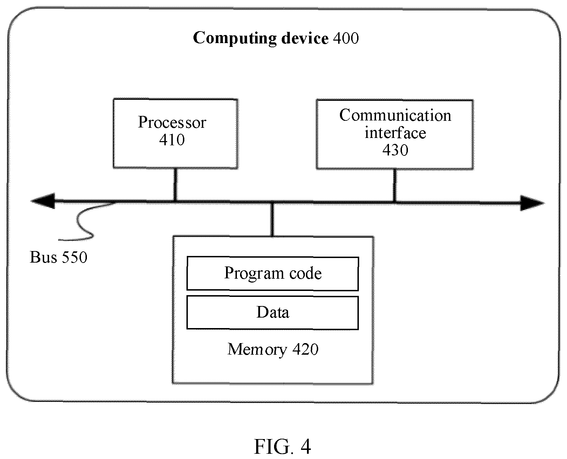

FIG. 4 is a diagram of a structure of a computing device. Any one of the foregoing first message sending apparatus 210, the foregoing code display apparatus 220, or the foregoing second message sending apparatus 230 may be deployed on the computing device. The computing device may be a computing device (for example, a server) in a cloud environment, a computing device in an edge environment, a terminal device, or the like, and may be specifically configured to implement functions of the first receiving module 211, the first sending module 212, the second receiving module 213, and the second sending module 214 in the embodiment shown in FIG. 3, configured to implement functions of the receiving module 221 and the display apparatus 222 in the embodiment shown in FIG. 3, or configured to implement functions of the receiving module 231, the display module 232, the obtaining module 233, and the sending module 234 in the embodiment shown in FIG. 3.

As shown in FIG. 4, the computing device 400 includes a processor 410, a memory 420, a communication interface 430, and a bus 440. The processor 410, the memory 420, and the communication interface 430 communicate with each other through the bus 440. The bus 440 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, the bus is represented by using only one thick line in FIG. 4, but this does not mean that there is only one bus or only one type of bus. The communication interface 4630 is configured to communicate with the outside, for example, receive original data provided by a user and a to-be-trained feature extraction network model.

The processor 410 may be a central processing unit (central processing unit, CPU), an application-specific integrated circuit (application-specific integrated circuit, ASIC), a graphics processing unit (graphics processing unit, GPU), or one or more integrated circuits. The processor 410 may alternatively be an integrated circuit chip, and has a signal processing capability. In an implementation process, functions of the modules in the foregoing apparatus may be completed by using an integrated logic circuit of hardware in the processor 410, or by using instructions in a form of software. The processor 410 may alternatively be a general-purpose processor, a data signal processor (digital signal processor, DSP), a field programmable gate array (field programmable gate array, FPGA) or another programmable logic device, a discrete gate or transistor logic device, or a discrete hardware component, the processor may implement or perform the methods, steps, and logical block diagrams disclosed in embodiments of this application. The general-purpose processor may be a microprocessor, or the processor may be any conventional processor or the like. The method disclosed with reference to embodiments of this application may be directly performed and completed by a hardware decoding processor, or may be performed and completed by using a combination of hardware and software modules in the decoding processor. The software module may be located in a mature storage medium in the art, such as a random access memory, a flash memory, a read-only memory, a programmable read-only memory, an electrically erasable programmable memory, or a register. The storage medium is located in the memory 420. The processor 410 reads information in the memory 620, and completes a part or all functions of a first message sending apparatus, a code display apparatus, or a second message sending apparatus in combination with hardware of the processor 410.

The memory 420 may include a volatile memory (volatile memory), for example, a random access memory (random access memory, RAM). The memory 420 may further include a non-volatile memory (non-volatile memory), for example, a read-only memory (read-only memory, ROM), a flash memory, an HDD, or an SSD.

The memory 420 stores executable code, and the processor 410 executes the executable code to perform the method performed by the first message sending apparatus, the code display apparatus, or the second message sending apparatus.

Specifically, when the embodiment shown in FIG. 3 is implemented, and the first receiving module 211, the first sending module 212, the second receiving module 213, and the second sending module 214 that are described in the embodiment shown in FIG. 3 are implemented by using software, software or program code required for performing the functions of the first receiving module 211, the first sending module 212, the second receiving module 213, and the second sending module 214 in FIG. 3 is stored in the memory 420, interaction between the first message sending apparatus 210 and another device is implemented through the communication interface 430, and the processor is configured to execute the instructions in the memory 420, to implement the message sending method performed by the first message sending apparatus 210.

Alternatively, when the embodiment shown in FIG. 3 is implemented, and the receiving module 221 and the display apparatus 222 that are described in the embodiment shown in FIG. 3 are implemented by using software, software or program code required for performing the functions of the receiving module 221 and the display apparatus 222 in FIG. 3 is stored in the memory 420, interaction between the code display apparatus 220 and another device is implemented through the communication interface 430, and the processor is configured to execute instructions in the memory 420, to implement the code display method performed by the code display apparatus 220.

Specifically, when the embodiment shown in FIG. 3 is implemented, and the receiving module 231, the display module 232, the obtaining module 233, and the sending module 234 that are described in the embodiment shown in FIG. 3 are implemented by using software, software or program code required for performing the functions of the receiving module 231, the display module 232, the obtaining module 233, and the sending module 234 in FIG. 3 is stored in the memory 420, interaction between the second message sending apparatus 230 and another device is implemented through the communication interface 430, and the processor is configured to execute the instructions in the memory 420, to implement the message sending method performed by the second message sending apparatus 230.

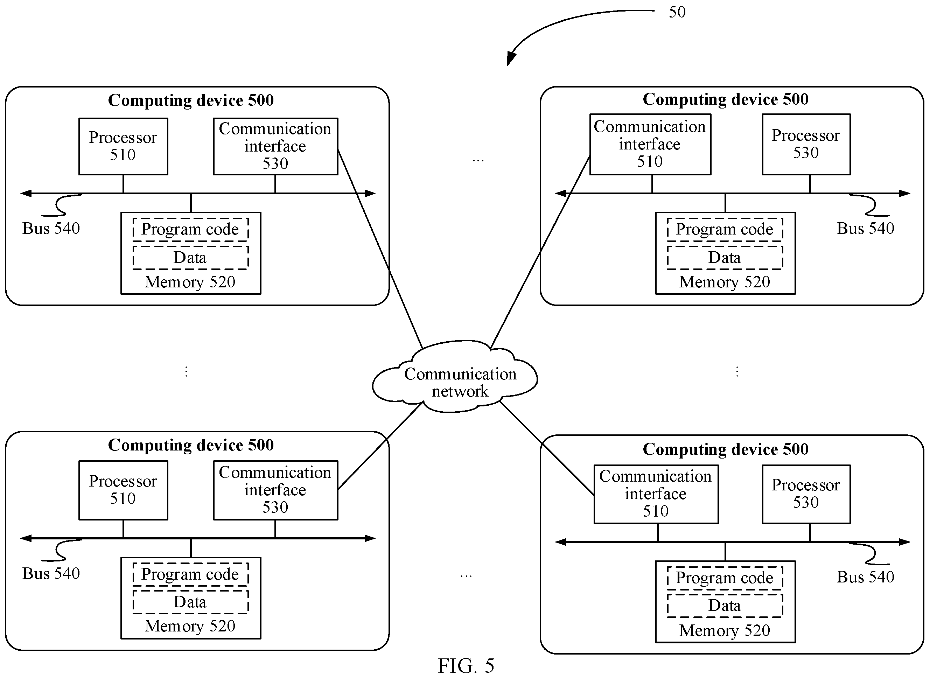

FIG. 5 is a diagram of a structure of a computing device cluster. The computing device cluster 50 shown in FIG. 5 includes a plurality of computing devices. The foregoing first message sending apparatus 210, the foregoing code display apparatus 220, and the foregoing second message sending apparatus 230 may be deployed on the plurality of computing devices in the computing device cluster 50 in a distributed manner. As shown in FIG. 5, the computing device cluster 50 includes the plurality of computing devices 500. Each computing device 500 includes a memory 520, a processor 510, a communication interface 530, and a bus 540. The memory 520, the processor 510, and the communication interface 530 implement mutual communication connections through the bus 540.

The processor 510 may use a CPU, a GPU, an ASIC, or one or more integrated circuits. The processor 510 may alternatively be an integrated circuit chip, and has a signal processing capability. In an implementation process, a part of functions of the first message sending apparatus 210 may be completed by using an integrated logic circuit of hardware in the processor 510, or by using instructions in a form of software. The processor 510 may alternatively be a DSP, an FPGA, a general-purpose processor, another programmable logic device, a discrete gate or transistor logic device, or a discrete hardware component, and may implement or perform a part of methods, steps, and logical block diagrams disclosed in embodiments of this application. The general-purpose processor may be a microprocessor, or the processor may be any conventional processor or the like. The steps of the method disclosed with reference to embodiments of this application may be directly performed and completed by a hardware decoding processor, or may be performed and completed by using a combination of hardware and software modules in the decoding processor. The software module may be located in a mature storage medium in the art, such as a random access memory, a flash memory, a read-only memory, a programmable read-only memory, an electrically erasable programmable memory, or a register. The storage medium is located in the memory 520. In each computing device 550, the processor 510 reads information in the memory 520, and may complete a part of functions of the first message sending apparatus 210 in combination with hardware of the processor 510.

The memory 520 may include a ROM, a RAM, a static storage device, a dynamic storage device, a hard disk (for example, an SSD or an HDD), and the like. The memory 720 may store program code, for example, a part or all of program code used to implement the first receiving module 211, a part or all of program code used to implement the first sending module 212, a part or all of program code used to implement the second receiving module 213, and a part or all of program code used to implement the second sending module 214. For each computing device 500, when the program code stored in the memory 520 is executed by the processor 510, the processor 510 performs, based on the communication interface 530, a part of methods performed by a first message sending apparatus. For example, a part of computing devices 400 may be configured to perform the methods performed by the first receiving unit 211 and the first sending unit 212, and another part of computing devices 500 are configured to perform the method performed by the second receiving unit 213 and the second sending unit 214. The memory 520 may further store data, for example, intermediate data or result data generated by the processor 510 in an execution process, for example, the foregoing review comment information.

The communication interface 503 in each computing device 500 is configured to communicate with the outside, for example, interact with another computing device 500.

The bus 540 may be a peripheral component interconnect bus, an extended industry standard architecture bus, or the like. For ease of representation, the bus 540 in each computing device 500 in FIG. 5 is represented by using only one thick line, but this does not mean that there is only one bus or only one type of bus.

A communication path is established between the plurality of computing devices 500 via a communication network, to implement functions of a first message sending apparatus, a code display apparatus, or a second message sending apparatus. Any computing device may be a computing device (for example, a server) in a cloud environment, a computing device in an edge environment, or a terminal device.

In addition, an embodiment of this application further provides a computer-readable storage medium. The computer-readable storage medium stores instructions. When the instructions are run on one or more computing devices, the one or more computing devices are enabled to perform the method performed by each unit of the first message sending apparatus in the foregoing embodiments, the method performed by each unit of the code display apparatus in the foregoing embodiments, or the method performed by each unit of the second message sending apparatus in the foregoing embodiments.

In addition, an embodiment of this application further provides a computer program product. When the computer program product is executed by one or more computing devices, the one or more computing devices perform the method performed by each unit of the first message sending apparatus in the foregoing embodiments, the method performed by each unit of the code display apparatus in the foregoing embodiments, or the method performed by each unit of the second message sending apparatus in the foregoing embodiments.

The computer program product may be a software installation package. When any method provided in the foregoing embodiments needs to be used, the computer program product may be downloaded and executed on a computer.

In addition, it should be noted that the described apparatus embodiments are merely examples. The units described as separate parts may or may not be physically separate, and parts displayed as units may or may not be physical units, may be located in one position, or may be distributed on a plurality of network units. A part or all of the units may be selected based on an actual requirement to achieve the objectives of the solutions of embodiments. In addition, in the accompanying drawings of the apparatus embodiments provided in this application, connection relationships between units indicate that the units have communication connections with each other, which may be specifically implemented as one or more communication buses or signal cables.

Based on the descriptions of the foregoing implementations, a person skilled in the art may clearly understand that this application may be implemented by using software in addition to necessary universal hardware, or by using dedicated hardware, including a dedicated integrated circuit, a dedicated CPU, a dedicated memory, a dedicated component, and the like. Generally, any function that can be performed by a computer program can be easily implemented by using corresponding hardware. Moreover, a specific hardware structure used to achieve a same function may be in various forms, for example, in a form of an analog circuit, a digital circuit, or a dedicated circuit. However, for this application, software program implementation is a better implementation in most cases. Based on such an understanding, the technical solutions of this application essentially or the part contributing to the conventional technology may be implemented in a form of a software product. The computer software product is stored in a readable storage medium, for example, a floppy disk, a USB flash drive, a removable hard disk, a ROM, a RAM, a magnetic disk, or an optical disc of a computer, and includes several instructions for instructing a computer device (which may be a personal computer, a training device, a network device, or the like) to perform the methods in embodiments of this application.

All or a part of the foregoing embodiments may be implemented by using software, hardware, firmware, or any combination thereof. When the software is used to implement embodiments, all or a part of embodiments may be implemented in a form of a computer program product.

The computer program product includes one or more computer instructions. When the computer program instructions are loaded and executed on a computer, the procedure or functions according to embodiments of this application are all or partially generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, a computer, a training device, or a data center to another website, computer, training device, or data center in a wired (for example, a coaxial cable, an optical fiber, or a digital subscriber line (DSL)) or wireless (for example, infrared, radio, or microwave) manner. The computer-readable storage medium may be any usable medium that can be stored by a computer, or a data storage device, such as a training device or a data center, integrating one or more usable media. The usable medium may be a magnetic medium (for example, a floppy disk, a hard disk, or a magnetic tape), an optical medium (for example, a DVD), a semiconductor medium (for example, a solid-state disk (Solid-State Disk, SSD)), or the like.

## Claims

1. A message sending method, wherein the method comprises:
receiving a first message, wherein the first message comprises review comment information corresponding to first code, the first code is uploaded by a first user to a code repository via a first client, the review comment information comprises related information of a comment provided by a second user for the first code, and the second user is a developer corresponding to the first code; and
sending a second message to the first client, wherein the second message comprises the review comment information, and the second message indicates the first client to synchronously display the review comment information and the first code based on a development environment of the first code.

2. The method according to claim 1, wherein before the receiving a first message, the method further comprises:
receiving a third message, wherein the third message indicates that the first code enters a code review procedure; and
sending a fourth message to a second client based on the third message, wherein the fourth message indicates the second client to obtain the first code in the code repository and display the first code based on a preset page, a format of the preset page matches a format of a page of the development environment of the first code, and the second client is a client corresponding to the second user.

3. The method according to claim 1 or 2, wherein the second client comprises the development environment of the first code, the preset page is the page of the development environment of the first code, and the fourth message further indicates the second client to obtain the first code from the code repository.

4. The method according to claim 1 or 2, wherein the second client does not comprise the development environment of the first code, and after the receiving a third message, the method further comprises:
sending a fifth message to a development environment providing apparatus, wherein the development environment providing apparatus is configured to provide the development environment of the first code for the second client via a network, and the fifth message indicates the development environment providing apparatus to provide the development environment of the first code for the second client via the network.

5. The method according to any one of claims 1 to 4, wherein before the sending a fourth message to a second client based on the third message, the method further comprises:
determining that the second client is in a login state.

6. The method according to claim 5, wherein before the determining that the second client is in a login state, the method further comprises:
sending prompt information to a preset device in response to the second client being in a logout state, wherein the prompt information is used to prompt the second user to log in to the second client, and the preset device is a communication device preset by a second person.

7. The method according to any one of claims 1 to 6, wherein the method further comprises:
sending a sixth message to the second client in response to second code being uploaded to the code repository, wherein the second code is first code modified by the first user based on the review comment information, and the sixth message indicates the second client to display the second code based on the preset page.

8. The method according to any one of claims 1 to 7, wherein the method further comprises:
obtaining a seventh message, wherein the seventh message comprises reply information of the first user to the review comment information; and
sending the reply information to the second client, to enable the second client to display the reply information by using the preset page.

9. A code display method, wherein the method is applied to and run on a first client, and comprises:
receiving review comment information, wherein the review comment information comprises related information of a comment provided by a reviewer corresponding to first code for the first code, and the first code is uploaded to a code repository via the first client; and
displaying the first code and the review comment information in an associated manner in a development environment of the first code.

10. The method according to claim 9, wherein before the review comment information is obtained, the method further comprises:
sending a review request message in response to a first user triggering a review operation, wherein the first user is a user corresponding to the first client, and the review request message is used to request the reviewer corresponding to the first code to review the first code.

11. A message sending method, wherein the method is applied to a second client, and comprises:
displaying first code based on a preset page, wherein a format of the preset page matches a format of a page of a development environment of the first code, and the first code is uploaded to a code repository via a first client;
obtaining review comment information, wherein the review comment information comprises related information of a comment provided, for the first code, by a user who uses the second client; and
sending a comment message to the first client, wherein the comment message comprises the review comment information.

12. The method according to claim 11, wherein the second client comprises the development environment of the first code, and the preset page is the page of the development environment of the first code; and
before the displaying first code based on a preset page, the method further comprises:
obtaining the first code from the code repository.

13. The method according to claim 12, wherein the second client does not comprise the development environment of the first code, and the preset page is used to control the development environment that is of the first code and that is provided by a development environment providing apparatus; and
before the displaying first code based on a preset page, the method further comprises:
receiving the first code and a page material of the preset page that are sent by the development environment providing apparatus; and
generating the preset page based on the page material of the preset page.

14. A message sending apparatus, wherein the apparatus comprises:
a first receiving module, configured to receive a first message, wherein the first message comprises review comment information corresponding to first code, the first code is uploaded by a first user to a code repository via a first client, the review comment information comprises related information of a comment provided by a second user for the first code, and the second user is a reviewer corresponding to the first code; and
a first sending module, configured to send a second message to the first client, wherein the second message comprises the review comment information, and the second message indicates the first client to synchronously display the review comment information and the first code based on a development environment of the first code.

15. The apparatus according to claim 14, wherein the apparatus further comprises:
a second receiving module, configured to receive a third message, wherein the third message indicates that the first code enters a code review procedure; and
a second sending module, configured to send a fourth message to a second client based on the third message, wherein the fourth message indicates the second client to obtain the first code in the code repository and display the first code based on a preset page, a format of the preset page matches a format of a page of the development environment of the first code, and the second client is a client corresponding to the second user.

16. The apparatus according to claim 14 or 15, wherein the second client comprises the development environment of the first code, the preset page is the page of the development environment of the first code, and the fourth message further indicates the second client to obtain the first code from the code repository.

17. The apparatus according to claim 14 or 13, wherein the second client does not comprise the development environment of the first code, and the apparatus further comprises a third sending module, wherein
the third sending module is configured to send a fifth message to a development environment providing apparatus, the development environment providing apparatus is configured to provide the development environment of the first code for the second client via a network, and the fifth message indicates the development environment providing apparatus to provide the development environment of the first code for the second client via the network.

18. The apparatus according to any one of claims 14 to 17, wherein the apparatus further comprises a third sending unit, wherein
the third sending unit is further configured to: before the fourth message is sent to the second client based on the third message, determine that the second client is in a login state.

19. The apparatus according to claim 8, wherein
the third sending unit is further configured to send prompt information to a preset device in response to the second client being in a logout state, wherein the prompt information is used to prompt the second user to log in to the second client, and the preset device is a communication device preset by a second person.

20. The apparatus according to any one of claims 13 to 19, wherein
the second sending module is further configured to send a sixth message to the second client in response to second code being uploaded to the code repository, the second code is first code modified by the first user based on the review comment information, and the sixth message indicates the second client to display the second code based on the preset page.

21. The apparatus according to any one of claims 14 to 20, wherein
the second obtaining module is further configured to obtain a seventh message, wherein the seventh message comprises reply information of the first user to the review comment information; and
the second sending module is further configured to send the reply information to the second client, to enable the second client to display the reply information by using the preset page.

22. A code display apparatus, wherein the apparatus is used in and runs on a first client, and the apparatus comprises:
a receiving module, configured to receive review comment information, wherein the review comment information comprises related information of a comment provided by a reviewer corresponding to first code for the first code, and the first code is uploaded to a code repository via the first client; and
a display module, configured to display the first code and the review comment information in an associated manner in a development environment of the first code.

23. The apparatus according to claim 22, wherein the apparatus further comprises a sending module, wherein
the sending module is configured to send a review request message in response to a first user triggering a review operation, the first user is a user corresponding to the first client, and the review request message is used to request the reviewer corresponding to the first code to review the first code.

24. A message sending apparatus, wherein the apparatus is used in a second client, and the apparatus comprises:
a display module, configured to display first code based on a preset page, wherein a format of the preset page matches a format of a page of a development environment of the first code, and the first code is uploaded to a code repository via a first client;
an obtaining module, configured to obtain review comment information, wherein the review comment information comprises related information of a comment provided, for the first code, by a user who uses the second client; and
a sending module, configured to send a comment message to the first client, wherein the comment message comprises the review comment information.

25. The apparatus according to claim 24, wherein the second client comprises the development environment of the first code, and the preset page is the page of the development environment of the first code; and
the obtaining module is further configured to obtain the first code from the code repository.

26. The apparatus according to claim 24, wherein the second client does not comprise the development environment of the first code, and the preset page is used to control the development environment that is of the first code and that is provided by a development environment providing apparatus;
the obtaining module is further configured to receive the first code and a page material of the preset page that are sent by the development environment providing apparatus; and
the display module is further configured to generate the preset page based on the page material of the preset page.

27. A computing device cluster, wherein the computing device cluster comprises at least one computing device, and each computing device comprises a processor and a memory, wherein
the memory is configured to store instructions; and
the processor is configured to enable, based on the instructions, the computing device cluster to perform the method according to any one of claims 1 to 9.

28. A computer-readable storage medium, wherein the computer-readable storage medium stores instructions, and when the instructions are run on a computing device, the computing device is enabled to perform the method according to any one of claims 1 to 13.

29. A computer code product comprising instructions, wherein when the computer code product runs on a computing device, the computing device is enabled to perform the method according to any one of claims 1 to 13.
